# FASCICULE DE BREVET EUROPEEN

(11) **EP 3 184 161 B1**
(45) Date de publication et mention de la délivrance du brevet: **17.10.2018**
(21) Numéro de dépôt: 16205487.8
(22) Date de dépôt: 20.12.2016
(51) Int. Cl.: B01D 46/52, B01D 46/00, B01D 46/10, F02M 35/024

(54) **SYSTÈME DE FILTRATION D'AIR POUR VÉHICULE AUTOMOBILE**
LUFTFILTERUNGSSYSTEM FÜR KRAFTFAHRZEUG
AIR-FILTERING SYSTEM FOR MOTOR VEHICLE

(30) Priorité: 23.12.2015 FR 1563203
(43) Date de publication de la demande: 28.06.2017
(73) Titulaire: NOVARES FRANCE, 92140 Clamart (FR)
(72) Inventeur: PINEAU, Philippe, 59270 BAILLEUL (FR); LEBRUN, Michel, 62138 AUCHY LES MINES (FR); LESENEY, Bruno, 59234 VILLERS-AU-TERTRE (FR)
(74) Mandataire: Delorme, Nicolas

(56) Documents cités:
- EP-A1- 0 329 544
- DE-A1-102010 025 971
- US-A- 4 865 637
- US-A1- 2013 091 811

## Description

La présente invention concerne un système de filtre à air pour véhicule automobile.

Sur un véhicule équipé d'un moteur à combustion interne, le flux d'air qui alimente le moteur passe au travers d'un filtre à air qui retire les particules indésirables telles que poussières, sable, insectes...Les particules présentes dans l'air ont un effet perturbateur sur le fonctionnement du moteur, en augmentent l'usure et risquent de l'endommager.

Par filtre à air, on entend un élément filtrant en papier ou en matériau synthétique, généralement plissé afin d'augmenter la surface filtrante.

Ces éléments filtrants sont dotés d'un joint qui assure l'étanchéité entre l'élément filtrant et le boitier de filtre à air qui constitue le réceptacle de l'élément filtrant. La gestion de l'étancheité est un point critique puisqu'il convient de garantir une séparation stricte entre un volume d'air non filtré communément appelé « air sale » et un volume contenant l'air filtré communément appelé « air propre ».

Le joint disposé en périphérie de l'élément filtrant peut présenter différentes compositions, telles que du polyuréthane ou de la résine thermoplastique surmoulés sur l'élément filtrant. Des inconvénients relatifs à l'usage d'un joint polyuréthane résident en ce que sa fabrication nécessite la mise en oeuvre d'une réaction chimique avec des équipements spécifiques, tel qu'un dispositif de dosage des réactifs chimiques, des procédures de protection des opérateurs, des opérations manuelles de reprise des bavures formées lors du surmoulage.

De plus, le procédé de production par surmoulage est lourd en investissement dans la mesure où il nécessite un ou plusieurs moule(s) de surmoulage pour chaque dimension de filtre. Le procédé génère également une disparité de performance des éléments filtrants car, lors du surmoulage, le polyuréthane ou la résine thermoplastique peut migrer à l'intérieur des plis de l'element filtrant et réduire ainsi la surface de filtration. En outre, il est très difficile de séparer un joint en polyuréthane ou en résine thermoplastique obtenu par surmoulage du panneau filtrant en matériau non tissé de sorte que le recyclage est quasimement impossible.

Selon une autre possibilité, le joint peut être formé par thermoformage du pourtour du panneau filtrant, sans ajout de matière ou de composant, mais nécessite cependant un procédé de production complexe. Cette méthode nécessite également de prévoir un moule de thermoformage pour chaque taille de filtre. De plus, la zone de joint thermoformée réduit la surface de filtration utile.

Le joint peut également être formé à partir d'un média non tissé collé ou soudé au panneau filtrant. Ce média non tissé peut, par exemple, être formé à partir d'une pièce pleine qui sera évidée pour former un cadre aux dimensions adaptées au panneau filtrant. Un inconvénient de cette méthode réside en ce qu'une perte importante de matière résulte de l'évidement, ce qui se répercute sur son coût de revient. Un autre inconvénient de cette méthode réside en ce que la mise en place de ce cadre prédécoupé à la périphérie des quatre cotés d'une des faces supérieure ou inférieur du panneau filtrant est difficile à réaliser dans le flux de production.

Le joint en média non tissé peut également être disposé sous forme de quatre bandelettes superposées à la périphérie des quatre cotés d'une des faces supérieure ou inférieur du panneau filtrant mais cette configuration nécessite de gérer le positionnement précis de chaque bandelette et de prévoir un robot ou un opérateur pour les mettre en place.

Le joint en média non tissé peut également être disposé sous forme de deux bandelettes disposées sur les extrémités latérales des plis du panneau filtrant, mais cette solution ne permet pas d'assurer simplement une continuité d'étanchéité sur tout le pourtour de l'élément filtrant.

On connait également par le document FR-A-3 006 908, un élément filtrant dont l'étanchéité est réalisée par des bandes qui sont rapportées latéralement. L'élément filtrant fabriqué selon l'enseignement de ce document nécessite cependant des opérations industrielles pour rapporter les bandes latérales.

Le document DE 10 2010 025971 décrit un système de filtration d'air pour véhicule automobile comprenant un filtre en accordéon, une cuve, un couvercle et un joint présentant des premiers moyens d'étanchéité entre le couvercle et le filtre. Le document US 4 865 637 divulgue un joint disposé sur le couvercle d'un système filtrant qui comprend deux lèvres, le joint n'assurant que l'étanchéité entre le couvercle et la cuve.

Dans ce contexte technique, un but de l'invention est de fournir un système de filtration d'air assurant une haute qualité de filtration tout en utilisant un élément filtrant simple et peu onéreux à fabriquer.

La présente invention propose un système de filtration d'air pour véhicule automobile qui comprend un élément filtrant constitué d'une nappe pliée en accordéon formant un ensemble de plis parallèles s'étendant transversalement entre des premier et second rebords longitudinaux, ledit élément fitrant étant interposé entre (i) une cuve présentant des moyens de support d'élément fitrant et (ii) un couvercle équipé d'un joint présentant des premiers moyens d'étanchéité entre le couvercle et l'élément filtrant et des seconds moyens d'étanchéité entre le couvercle et la cuve.

Ainsi, l'invention permet l'utilisation d'un élément filtrant qui est lui-même dépourvu d'accessoire de gestion d'étanchéité en créant une double étanchéité (i) d'une part, pour une étanchéité air sale/air propre à l'intérieur du boitier, et (ii) d'autre part, pour une étanchéité couvercle /cuve .

Dans une forme de réalisation préférée, le couvercle comprend un rebord sur lequel est disposé un joint présentant une première lèvre intérieure destinée à venir en appui contre les rebords longitudinaux de l'élément filtrant et contre les plis d'extrémité de l'élément filtrant et une seconde lèvre destinée à venir en appui contre le rebord de la cuve.

Dans cette forme de réalisation, la double étanchéité est créée (i) d'une part, par la première lèvre qui est en appui contre les rebords de l'élément filtrant, et (ii) d'autre part, par la seconde lèvre vient en appui contre le rebord la cuve.

De préférence, les rebords longitudinaux de l'élément filtrant présentent une surface plane.

Il peut être prévu que la cuve comprenne des parois longitudinales sur lesquelles sont ménagées des nervures à proximité de l'extrémité libre desdites parois longitudinales de manière à assurer un support longitudinal à l'élément filtrant.

De plus, la cuve peut présenter deux lames de support qui s'étendent transversalement entre les parois longitudinales de manière à assurer un support transversal à l'élément filtrant.

Préférentiellement, la cuve possède un rebord périphérique qui ceinture l'ouverture de la cuve.

Selon une forme de réalisation, le joint présente une semelle qui est destinée à venir en applique contre le rebord périphérique du couvercle, de laquelle s'étendent la première lèvre et la seconde lèvre.

De plus, il est envisagé que système comprenne des moyens de verrouillage du couvercle sur la cuve permettant de mettre sous contrainte le joint entre la cuve et le couvercle.

Selon une forme de réalisation, le joint est co moulé avec le couvercle.

Selon une autre forme de réalisation, le joint est déposé in situ sur le couvercle.

Pour sa bonne compréhension, l'invention est décrite en référence aux dessins ci-annexés représentant à titre d'exemple non limitatif une forme de réalisation d'un système de filtration d'air selon celle-ci.
Figure 1 est une vue en perspective d'un système de filtration,
Figures 2 et 3 sont des vues en coupe respectivement transversale et longitudinale du système de filtration,
Figure 4 est une vue en perspective d'une cuve du système de filtration,
Figure 5 est une vue en perspective d'un couvercle du système de filtration,
Figure 6 est une vue en perspective d'un élément filtrant du système de filtration,
Figure 7 est une vue partielle en coupe transversale à une échelle agrandie.

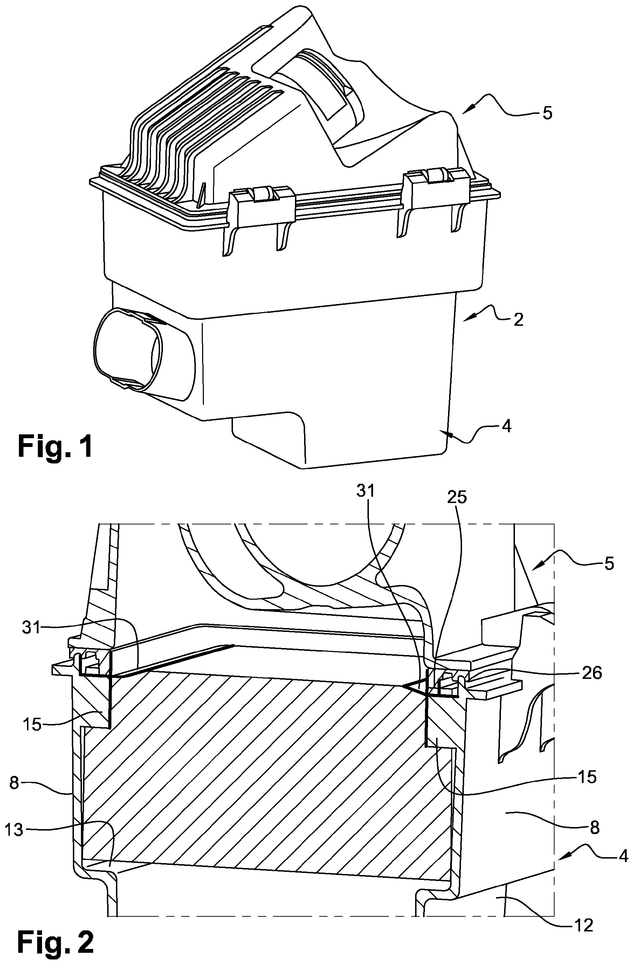

Le système de filtration d'air représenté aux figures 1 à 7 comprend un boitier de filtre à air 2 destiné à être positionné dans un compartiment moteur d'un véhicule et un élément filtrant 3 qui est disposé dans le boitier de filtre à air.

La figure 1 montre en perspective le boitier de filtre à air 2 ; celui-ci comprend une cuve 4 qui est conçue pour être fixée dans le compartiment moteur d'un véhicule et un couvercle 5 qui est fixé, de manière amovible, sur la cuve 4.

Dans l'exemple de réalisation montré sur les figures, la cuve 4 présente une géométrie générale parallélépipédique.

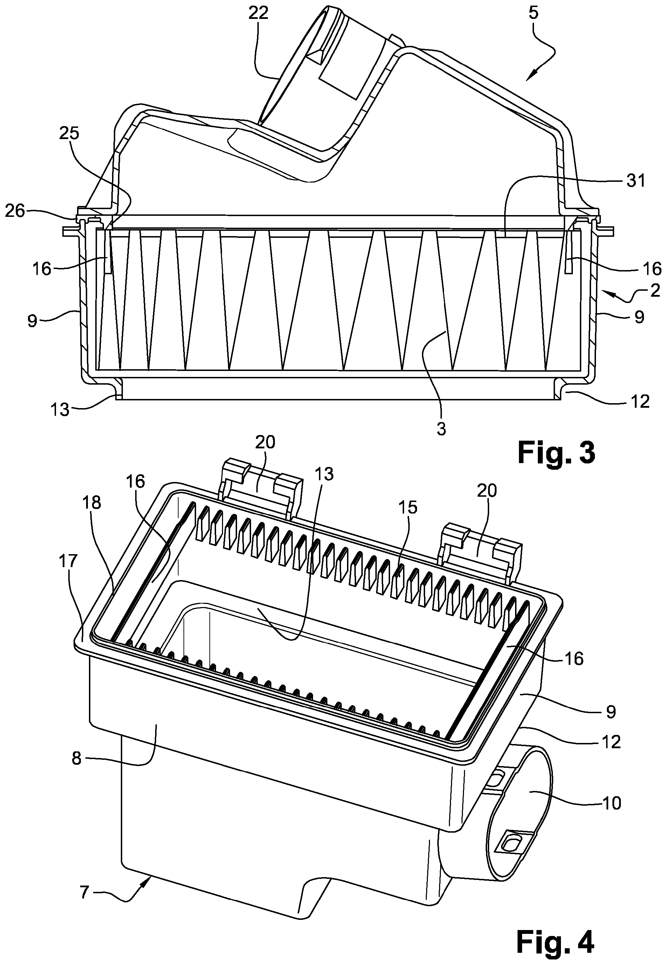

La cuve 4 qui apparait plus précisément à la figure 4, possède, de façon schématique, une paroi de fond 7 de laquelle s'étendent deux parois longitudinales 8 parallèles et deux parois transversales 9 parallèles. Dans l'exemple de réalisation présentement décrit, l'une des parois transversales 9 est équipée d'un raccord de connexion 10 à un tube du circuit d'air du véhicule qui n'est pas représenté.

On note que les parois latérales transversales et longitudinales présentent un décrochement 12 qui forme un épaulement 13 continu sur la face intérieure de la cuve 4.

La cuve 4 est, de plus, dotée de nervures 15 disposées selon un pas régulier sur les parois longitudinales 8 à proximité de l'extrémité libre de ces dernières.

La cuve 4 présente, en outre, deux lames de support 16 qui s'étendent transversalement entre les parois longitudinales 8. Les deux lames de support 16 sont placées au même niveau que les nervures 15 et sont disposées à proximité des parois transversales 9.

On note, de plus, que la cuve 4 possède un rebord périphérique 17 qui ceinture l'ouverture de la cuve 4. Le rebord périphérique 17 s'étend de manière sensiblement perpendiculaire aux parois longitudinales 8 et aux parois transversales 9 et s'inscrit dans un plan. Une nervure 18 dépasse du rebord périphérique 17. La nervure 18 est continue et est fermée sur elle-même.

La cuve 4 est réalisée, de préférence, en matériau thermoplastique et est fabriquée par moulage par injection.

La cuve 4 présente des moyens de fixations tels que les cavaliers 20 qui sont positionnés sur l'une des parois longitudinales 8.

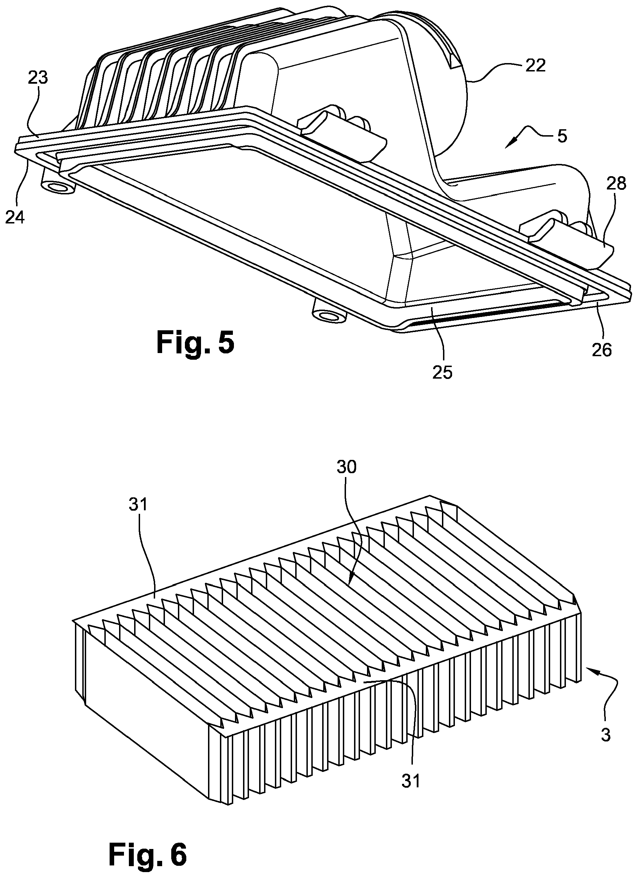

Le couvercle 5 qui est représenté plus précisément à la figure 5 présente une forme schématique en auge et a pour fonction de fermer la cuve 4. Le couvercle 5 est réalisé dans un matériau thermoplastique tel que par exemple un polypropylène ; le couvercle 5 est de préférence fabriqué par moulage par injection.

La face dorsale du couvercle 5 est dotée d'un raccord de connexion 22 au circuit d'admission d'air du véhicule.

Le couvercle 5 présente un rebord périphérique 23 plan sur lequel est rapporté un joint 24 d'étanchéité. Le joint 24 possède une première zone d'étanchéité intérieure formée par une première lèvre 25 et une deuxième zone d'étanchéité extérieure formée par une seconde lèvre 26.

Dans la forme de réalisation montrée sur les figures, le joint 24 présente une semelle 27 qui est destinée à venir en applique contre le rebord périphérique du couvercle 5, de laquelle s'étendent la première lèvre 25 et la seconde lèvre 26.

Le joint 24 est réalisé dans un élastomère thermoplastique ou du type polyuréthane ; le joint 24 est de préférence réalisé par co-moulage avec le couvercle 5. Il est également possible de rapporter le joint 24 sur le couvercle 5 et de le fixer par collage, ou de le déposer in situ ou de le déposer dans une gorge ou tout autre moyen approprié d'assemblage et de fixation.

Le couvercle 5 peut, de plus, être doté de moyens de clipsage pour réaliser une fixation amovible sur la cuve 4. Comme on peut le voir sur la figure 5, le couvercle 5 peut être équipé de deux doigts 28 destinés à coopérer avec les organes de fixation des de la cuve 4.

Le système de filtration comprend, de plus, l'élément filtrant 3 qui est représenté de manière à la figure 6.

L'élément filtrant 3 est obtenu à partir d'une nappe d'un média filtrant, tel qu'un matériau synthétique non tissé résilient tel qu'un matériau polyester ou cellulosique. La nappe est pliée en accordéon de sorte à présenter un ensemble de plis 30 parallèles s'étendant transversalement. On note que l'élément filtrant 3 présente des premier et second rebords longitudinaux 31 communément appelés 'pleat lock' disposés au sommet des plis parallèles 3 et qui sont formés par un écrasement latéral des plis 30.

L'un des points distinctifs de l'élément filtrant 3 tient au fait qu'il est essentiellement mono matière et qu'il est dépourvu de tout élément rapporté destiné à gérer l'étanchéité.

L'élément filtrant 3 présente donc une structure essentiellement mono matière très simple.

La mise en place de l'élément filtrant 3 se fait de la manière suivante.

L'élément filtrant 3 est inséré dans la cuve 4.

Comme on peut le voir sur la figure 1, l'élément filtrant 3 vient reposer longitudinalement sur les nervures 15 de la cuve 4; les plis 30 qui forment l'élément filtrant 3 sont ainsi intercalés entre les nervures 15.

Transversalement, l'élément filtrant 3 vient, à chacune de ses extrémités, se placer sur les deux lames de support 16 ; les plis 31 de chaque extrémité viennent se positionner sur chacune des lames de support 16.

L'élément filtrant 3 est alors calé dans la cuve 4.

Le couvercle 5 est rabattu sur la cuve 4.

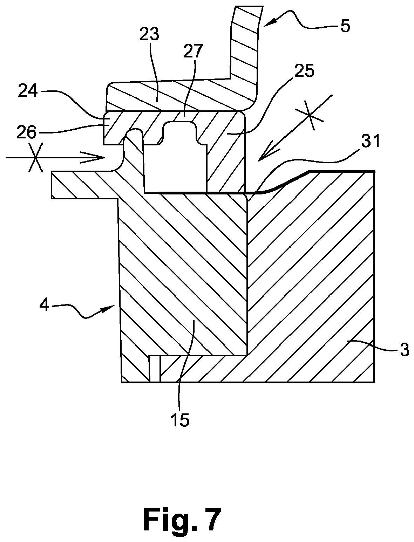

On peut se reporter à la figure 7 pour apprécier la manière avec laquelle s'effectue une double gestion de l'étanchéité.

Lors de l'accostage du couvercle 5 sur la cuve 4, la première lèvre 25 vient en appui sur les rebords longitudinaux 31 ou pleat-lock de l'élément filtrant 3 et la seconde lèvre 26 vient en appui sur le rebord de la cuve 4, plus précisément, contre la nervure 18.

Le couvercle 5 est ensuite verrouillé sur la cuve 4 par des moyens de verrouillage appropriés qui mettent sous contrainte le joint 24 contre la cuve 4.

La figure 7 illustre bien la double étanchéité qui est créée :
(i) d'une part, pour une étanchéité air sale/air propre à l'intérieur du boitier, la première lèvre 25 est en appui contre les rebords de l'élément filtrant 3 qui est lui-même en supporté longitudinalement par les nervures et transversalement par les lames de support, et
(ii) d'autre part, pour une étanchéité couvercle 5/cuve 4, la seconde lèvre 26 vient en appui contre le rebord la cuve 4,
étant précisé que l'élément filtrant 3 est lui-même dépourvu d'accessoire de gestion d'étanchéité et est essentiellement mono matière.

L'invention fournit ainsi un système de filtration d'air pour véhicule automobile qui utilise un élément filtrant simple, peu onéreux à fabriquer et facilement recyclable tout en garantissant un haut niveau de filtration.

## Revendications

1. Système de filtration d'air pour véhicule automobile, comprenant un élément filtrant (3) constitué d'une nappe pliée en accordéon formant un ensemble de plis (30) parallèles s'étendant transversalement entre des premier et second rebords longitudinaux (31), ledit élément fitrant étant interposé entre (i) une cuve (4) présentant des moyens de support d'élément fitrant et (ii) un couvercle (5) **caractérisé en ce que** le couvercle est équipé d'un joint (24) présentant des premiers moyens d'étanchéité entre le couvercle (5) et l'élément filtrant (3) et des seconds moyens d'étanchéité entre le couvercle (5) et la cuve (4).

2. Système de filtration d'air selon la revendication 1, **caractérisé en ce que** le couvercle (5) comprend un rebord (23) sur lequel est disposé un joint (24) présentant une première lèvre (25) intérieure destinée à venir en appui contre les rebords longitudinaux (31) de l'élément filtrant (3) et contre les plis d'extrémité de l'élément filtrant (3) et une seconde lèvre (26) destinée à venir en appui contre le rebord de la cuve (4).

3. Système de filtration d'air selon la revendication 2 **caractérisé en ce que** les rebords longitudinaux (31) de l'élément filtrant (3) présentent une surface plane.

4. Système de filtration d'air selon l'une des revendications 1 à 3, **caractérisé en ce que** la cuve (4) comprend des parois longitudinales (8) sur lesquelles sont ménagées des nervures (15) à proximité de l'extrémité libre desdites parois longitudinales.

5. Système de filtration d'air selon la revendication 4, **caractérisé en ce que** la cuve (4) présente deux lames de support (16) qui s'étendent transversalement entre les parois longitudinales (8).

6. Système de filtration d'air selon l'une des revendications 1 à 5, **caractérisé en ce que** la cuve (4) possède un rebord périphérique qui ceinture l'ouverture de la cuve (4).

7. Système de filtration d'air selon l'une des revendications 2 à 6, **caractérisé en ce que** le joint (24) présente une semelle (27) qui est destinée à venir en applique contre le rebord périphérique du couvercle (5), de laquelle s'étendent la première lèvre (25) et la seconde lèvre (26).

8. Système de filtration d'air selon l'une des revendication 1 à 7, **caractérisé en ce que** le système comprend des moyens de verrouillage du couvercle (5) sur la cuve (4) permettant de mettre sous contrainte le joint (24) entre la cuve (4) et le couvercle (5).

9. Système de filtration d'air selon l'une des revendications 1 à 8, **caractérisé en ce que** le joint (24) est co moulé avec le couvercle (5).

10. Système de filtration d'air selon l'une des revendications 1 à 8, **caractérisé en ce que** le joint (24) est déposé in situ (5) sur le couvercle (5).

## Patentansprüche

1. Luftfiltersystem für ein Kraftfahrzeug, umfassend ein Filterelement (3), das aus einer zur Ziehharmonika gefalteten Bahn besteht, die eine Reihe von parallelen Falten (30) bildet, welche sich quer zwischen ersten und zweiten Längsrändern (31) erstrecken, wobei das Filterelement zwischen (i) einer Wanne (4), die Filterelement-Tragmittel aufweist, und (ii) einem Deckel (5) eingefügt ist, **dadurch gekennzeichnet, dass** der Deckel mit einer Dichtung (24) ausgestattet ist, die erste Dichtmittel zwischen dem Deckel (5) und dem Filterelement (3), und zweite Dichtmittel zwischen dem Deckel (5) und der Wanne (4) aufweist.

2. Luftfiltersystem nach Anspruch 1, **dadurch gekennzeichnet, dass** der Deckel (5) einen Rand (23) umfasst, an dem eine Dichtung (24) angeordnet ist, die eine erste Innenlippe (25) aufweist, welche dazu vorgesehen ist, gegen die Längsränder (31) des Filterelements (3) und gegen die Endfalten des Filterelements (3) in Anlage zu gehen, und eine zweite Lippe (26), die dazu vorgesehen ist, gegen den Rand der Wanne (4) in Anlage zu gehen.

3. Luftfiltersystem nach Anspruch 2, **dadurch gekennzeichnet, dass** die Längsränder (31) des Filterelements (3) eine plane Fläche aufweisen.

4. Luftfiltersystem nach einem der Ansprüche 1 bis 3, **dadurch gekennzeichnet, dass** die Wanne (4) Längswände (8) umfasst, an denen Stege (15) in Nähe des freien Endes der Längswände ausgestaltet sind.

5. Luftfiltersystem nach Anspruch 4, **dadurch gekennzeichnet, dass** die Wanne (4) zwei Tragstreifen (16) aufweist, die sich quer zwischen den Längswänden (8) erstrecken.

6. Luftfiltersystem nach einem der Ansprüche 1 bis 5, **dadurch gekennzeichnet, dass** die Wanne (4) einen Umfangsrand besitzt, der die Öffnung der Wanne (4) umfängt.

7. Luftfiltersystem nach einem der Ansprüche 2 bis 6, **dadurch gekennzeichnet, dass** die Dichtung (24) eine Sohle (27) aufweist, die dazu vorgesehen ist, gegen den Umfangsrand des Deckels (5) in Auflage zu gehen, von der sich die erste Lippe (25) und die zweite Lippe (26) erstrecken.

8. Luftfiltersystem nach einem der Ansprüche 1 bis 7, **dadurch gekennzeichnet, dass** das System Mittel zum Verriegeln des Deckels (5) an der Wanne (4) umfasst, die es ermöglichen, die Dichtung (24) zwischen der Wanne (4) und dem Deckel (5) unter Spannung zu setzen.

9. Luftfiltersystem nach einem der Ansprüche 1 bis 8, **dadurch gekennzeichnet, dass** die Dichtung (24) gemeinsam mit dem Deckel (5) geformt ist.

10. Luftfiltersystem nach einem der Ansprüche 1 bis 8, **dadurch gekennzeichnet, dass** die Dichtung (24) an Ort und Stelle (5) auf den Deckel (5) aufgebracht ist.

## Claims

1. An air filtration system for a motor vehicle, comprising a filter element (3) consisting of an accordion-folded sheet forming a set of parallel folds (30) extending transversely between first and second longitudinal flanges (31), said filter element being interposed between (i) a tank (4) having filter element support means and (ii) a cover (5) **characterized in that** the cover is equipped with a seal (24) having first sealing means between the cover (5) and the filter element (3) and second sealing means between the cover (5) and the tank (4).

2. The air filtration system according to claim 1, **characterized in that** the cover (5) comprises a flange (23) on which is disposed a seal (24) having a first inner lip (25) intended to bear against the longitudinal flanges (31) of the filter element (3) and against the end folds of the filter element (3) and a second lip (26) intended to bear against the flange of the tank (4).

3. The air filtration system according to claim 2, **characterized in that** the longitudinal flanges (31) of the filter element (3) have a flat surface.

4. The air filtration system according to any of claims 1 to 3, **characterized in that** the tank (4) comprises longitudinal walls (8) on which are arranged ribs (15) close to the free end of said longitudinal walls.

5. The air filtration system according to claim 4, **characterized in that** the tank (4) has two support blades (16) which extend transversely between the longitudinal walls (8).

6. The air filtration system according to any of claims 1 to 5, **characterized in that** the tank (4) has a peripheral flange which surrounds the opening of the tank (4).

7. The air filtration system according to any of claims 2 to 6, **characterized in that** the seal (24) has a base (27) which is intended to rest against the peripheral flange of the cover (5), from which extend the first lip (25) and the second lip (26).

8. The air filtration system according to any of claims 1 to 7, **characterized in that** the system comprises means for locking the cover (5) on the tank (4) allowing to stress the seal (24) between the tank (4) and the cover (5).

9. The air filtration system according to any of claims 1 to 8, **characterized in that** the seal (24) is co-molded with the cover (5).

10. The air filtration system according to any of claims 1 to 8, **characterized in that** the seal (24) is deposited in situ (5) on the cover (5).
